# EUROPÄISCHE PATENTSCHRIFT

(11) **EP 3 015 687 B1**
(45) Veröffentlichungstag und Bekanntmachung des Hinweises auf die Patenterteilung: **30.12.2020**
(21) Anmeldenummer: 15002840.5
(22) Anmeldetag: 02.10.2015
(51) Int. Cl.: F02D 41/00, F02D 19/10, F02D 35/02, F02D 19/06, F02D 41/40

(54) **VERFAHREN ZUR REGELUNG EINES DUAL-FUEL-MOTORS**
METHOD FOR CONTROLLING A DUAL FUEL ENGINE
PROCEDE DE REGLAGE D'UN MOTEUR DUAL-FUEL

(30) Priorität: 28.10.2014 AT 7892014
(43) Veröffentlichungstag der Anmeldung: 04.05.2016
(73) Patentinhaber: GE Jenbacher GmbH & Co. OG, 6200 Jenbach (AT)
(72) Erfinder: Imhof, Dino, 81667 München (DE); Schaumberger, Herbert, 6232 Münster (AT); Lemke, Mark James, Sun Prairie, WI 53590 (US)
(74) Vertreter: Torggler & Hofinger Patentanwälte

(56) Entgegenhaltungen:
- WO-A1-2011/128692
- US-A1- 2004 139 943
- US-A1- 2013 311 066
- US-B1- 7 546 834

## Beschreibung

Die vorliegende Erfindung betrifft ein Verfahren zur Regelung eines Dual-Fuel-Motors, mit den Merkmalen des Oberbegriffs des Anspruchs 1 und einen Dual-Fuel-Motor mit den Merkmalen des Anspruchs 10.

Gattungsgemäße Motoren können in reinem Diesel- oder Schwerölbetrieb oder in einem sogenannten Dual-Fuel-Modus betrieben werden, in welchem die vorherrschende Kraftstoffart ein Gas ist und Diesel bzw. Schweröl lediglich zur Zündunterstützung verwendet wird. Eine derartige Brennkraftmaschine geht aus der US 8,671,911 B2 hervor.

Diese Veröffentlichung sieht die Anordnung eines Klopfsensors vor, durch welchen das Vorliegen eines Klopfens detektierbar ist. In Abhängigkeit des Detektiönssignals kann eine Regeleinheit die Mengen von gasförmigem und flüssigem Kraftstoff zu den Brennräumen der Brennkraftmaschine regeln.

Nachteilig am Stand der Technik ist, dass als Reaktion auf die Detektion eines Klopfens zwingend eine Zündverzögerung ("retard ignition") vorgesehen ist. Diese Regelstrategie berücksichtigt nicht, dass Klopfen aus unterschiedlichen Gründen vorliegen kann und ist daher nicht immer zielführend. Es kann daher in manchen Fällen erforderlich sein, zusätzliche Maßnahmen zu ergreifen, wie dies auch in der US 8,671,911 B2 beschrieben ist (Reduktion der eingebrachten Gasmenge).

WO 2011/128692 A1 und US 7 546 834 B1 offenbaren verschiedene Klopfregelungen für Dual-Fuel-Motoren.

Aufgabe der Erfindung ist die Bereitstellung eines Verfahrens zur Regelung eines gattungsgemäßen Dual-Fuel-Motors und die Bereitstellung eines Dual-Fuel-Motors, welches bzw. welcher differenzierter auf das Vorliegen von Klopfen reagiert.

Diese Aufgabe wird durch ein Verfahren mit den Merkmalen des Anspruchs 1 und einen Dual-Fuel-Motor mit den Merkmalen des Anspruchs 10 gelöst.

Anders als der Stand der Technik wird nicht sofort bei Vorliegen von Klopfen die Menge an erstem, gasförmigen Kraftstoff, welche dem Brennraum des Motors zugeführt wird, reduziert. Ganz im Gegenteil sieht die Erfindung vor (bezogen auf einen Arbeitszyklus des Dual-Fuel-Motors), die Menge an erstem, gasförmigen Kraftstoff zunächst (bis zur allfälligen Überschreitung eines höheren Schwellwertes oder dem Abklingen des Klopfens) zu erhöhen. Für die vorliegende Offenbarung zu beachten ist, dass der gasförmige Aggregatzustand des ersten Kraftstoffes erst zum Zeitpunkt der Verbrennung vorliegen muss.
Um die Gesamtleistung des Brennraumes während dieses Arbeitszyklus konstant zu halten, wird der durch den zweiten Kraftstoff bewirkte Leistungsbeitrag entsprechend verringert, zum Beispiel indem eine Reduktion der Menge an eingebrachtem zweiten Kraftstoff und/oder eine Verzögerung des Zeitpunkts der Einbringung des zweiten Kraftstoffes und/oder eine Änderung der Einspritzcharakteristik des zweiten Kraftstoffes vorgenommen wird. Bei der der Menge an eingebrachtem zweiten Kraftstoff handelt es sich um eine Pilotmenge, welche bezüglich der eingebrachten Energiemenge bei unter 5% der gesamten, durch Kraftstoff eingebrachten Energiemenge liegt.

In anderen Worten ausgedrückt, moderiert man die Verbrennung in dem wenigstens einen Brennraum um das Ausmaß des Klopfens in einem akzeptablen Rahmen zu halten. Dies erlaubt einen Betrieb des Motors an einem Betriebspunkt mit höchstmöglichem Anteil an erstem Kraftstoff, was zum einen aus wirtschaftlichen Überlegungen wünschenswert ist und zum anderen emissionstechnisch vorteilhaft ist.

Vorteilhafte Ausführungsformen sind in den abhängigen Ansprüchen definiert.

Die Intensität des Klopfsignals bestimmt sich aus Häufigkeit der Klopfereignisse und Stärke der Klopfereignisse. Ein Klopfen hoher Intensität kann zum Beispiel gleichermaßen durch häufiges, schwaches Klopfen und seltenes, starkes Klopfen entstehen.

Unter Einspritzcharakteristik versteht man die Form des Profils des Massenstroms des eingespritzten Kraftstoffes in Abhängigkeit von der Zeit. Die Fläche unter dem Profil, welche der Gesamtmenge an eingespritztem Kraftstoff entspricht, muss sich durch eine derartige Änderung der Form nicht zwangsläufig ändern. Die Änderung der Einspritzcharakteristik kann so erfolgen, dass der Großteil der eingespritzten Menge an zweitem Kraftstoff später erfolgt. Mit "später" ist zu einem späteren Zeitpunkt innerhalb des Einspritzereignisses gemeint. Dem Fachmann sind Variationen der Einspritzcharakteristik geläufig.
Es kann auch die Einspritzcharakteristik so geändert werden, dass der Beginn des Einspritzens - ggf. ohne Änderung der Form des Profils des Massenstroms - später erfolgt. In anderen Worten findet hier das gesamte Einspritzereignis später statt.

Besonders bevorzugt ist vorgesehen, dass der erste Kraftstoff vor Einbringung in den wenigstens einen Brennraum einer Luft beigemischt wird. Alternativ kann eine Mischung des ersten Kraftstoffes und der Luft im wenigstens einen Brennraum vor der eigentlichen Verbrennung erfolgen.

Bei einem Vormischen des ersten Kraftstoffes mit Luft vor dem wenigstens einen Brennraum kann die dem wenigstens einem Brennraum zugeführte Menge an erstem Kraftstoff zum Beispiel so erhöht werden, dass sogar ohne Änderung des Druckes (Ladedruck) die Temperatur des Gemisches aus Luft und erstem Kraftstoff gesenkt wird. Natürlich kann eine Erhöhung der zugeführten Menge an erstem Kraftstoff auch durch Erhöhung des Druckes (Ladedruckes) erfolgen.

Es kann auch vorgesehen sein, dass der erste Kraftstoff einer Luft (vor dem wenigstens einem Brennraum) beigemischt wird und zur Erhöhung der Menge an erstem Kraftstoff das Verhältnis von erstem Kraftstoff und Luft erhöht wird. Diese Maßnahme ist sowohl bei Port-Injection-Motoren (durch ein Port-Injection-Ventil) als auch bei gemischaufgeladenen Motoren (durch eine Gasdosiereinrichtung) möglich.

Der erste, gasförmige Kraftstoff kann zum Beispiel ein methandominierter Kraftstoff (zum Beispiel Erdgas), ein Biogas, ein Propangas (LPG), ein vergastes verflüssigtes Erdgas (LNG), ein vergastes Flüssiggas oder ein vergastes Benzin sein. Der zweite Kraftstoff kann zum Beispiel Diesel, Pflanzenöl oder Schweröl sein.

Bei der Erfindung kann das an sich für die Einbringung von Diesel oder Schweröl im Stand der Technik bekannte Konzept der Mehrfacheinspritzung für die Steuerung der Einspritzcharakteristik zum Einsatz kommen. Der zweite Kraftstoff wird in diesem Fall in mehreren Intervallen eingespritzt. Vorzugsweise kommt dieses Konzept dann zum Einsatz, wenn ein Klopfsignal vorliegt, welches auf ein Klopfen mit einer Intensität hinweist, die zwischen der ersten und der zweiten Intensität liegt.

Wie oben beschrieben, muss gemäß der Erfindung die Gesamtleistung des Brennraumes während eines Arbeitszyklus des Dual-Fuel-Motors konstant gehalten werden. Daher wird der durch den zweiten Kraftstoff bewirkte Leistungsbeitrag über einen Arbeitszyklus des Dual-Fuel-Motors integriert entsprechend verringert. Es kann aber durchaus vorgesehen sein, dass zu einem früheren Kurbelwellenwinkel mehr zweiter Kraftstoff eingespritzt wird, solange sichergestellt ist, dass der gesamte Leistungsbeitrag, zum Beispiel durch entsprechend spätere Einbringung der restlichen Einspritzmenge mit entsprechend weniger effizienter Verbrennung gering genug ist.

Weitere Einzelheiten der Erfindung werden beispielhaft anhand der Figuren diskutiert. Es zeigen:
- Fig. 1: das Verfahren als schematisches Ablaufschaubild in einem ersten Ausführungsbeispiel,
- Fig. 2: das Verfahren als schematisches Ablaufschaubild in einem weiteren Ausführungsbeispiel,
- Fig. 3: ein Diagramm von Lambda über der Substitutionsrate und
- Fig. 4: eine schematische Darstellung eines Dual-Fuel-Motors.

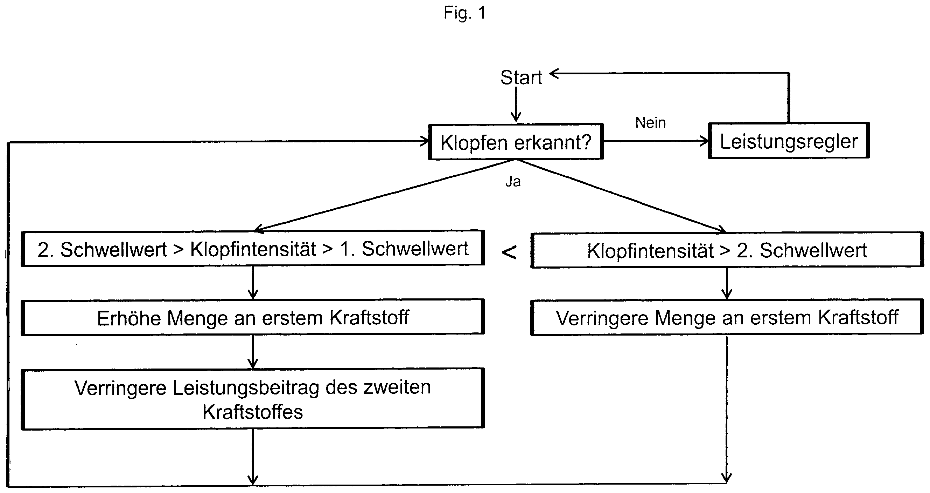

Fig. 1 zeigt das Verfahren in einem ersten Ausführungsbeispiel als schematisches Flussdiagramm. Bei Auftreten von Klopfen wird zwischen zwei Zweigen unterschieden. Im linken Zweig liegt die Klopfintensität zwar über dem ersten Schwellwert (d.h. es wird ein Klopfsignal detektiert, das auf Klopfen über der ersten Intensität hinweist), aber unter dem zweiten Schwellwert (d.h. es wird ein Klopfsignal detektiert, das auf Klopfen unter der zweiten Intensität hinweist). Hierauf wird die Menge an erstem Kraftstoff, welche dem Brennraum zugeführt wird, erhöht.
In der Folge wird die durch Erhöhung der Menge an erstem Kraftstoff bewirkte erhöhte Leistungseinbringung durch eine Verringerung des Leistungsbeitrages des zweiten Kraftstoffes kompensiert.
Mögliche Eingriffe zur Verringerung des Leistungsbeitrages des zweiten Kraftstoffes sind zum Beispiel (einzeln oder in beliebiger Kombination) die Verringerung der Menge an zweitem Kraftstoff, die Verzögerung des Einspritzzeitpunktes des zweiten Kraftstoffes, die Änderung der Einspritzrate des zweiten Kraftstoffes, Mehrfacheinspritzung des zweiten Kraftstoffes. Es bestehen auch Möglichkeiten, den Leistungsbeitrag des zweiten Kraftstoffes mittelbar zu beeinflussen, wie die Reduktion der Temperatur der Zylinderladung oder Erhöhen des Ladedrucks usw.

Überschreitet die Klopfintensität den zweiten Schwellwert, so wird dem mit einer Reduktion der Menge an erstem Kraftstoff, welcher dem wenigstens einen Brennraum zugeführt wird, begegnet. Dies ist in Fig.1 im rechten Zweig dargestellt. In weiterer Folge führen dann beide Zweige wieder zurück an die Klopfdetektionseinheit. Wird kein Klopfen detektiert, so ist die Motorregelung von dem normalen Leistungsregler dominiert, der dem Stand der Technik entspricht und daher hier nicht näher beschrieben werden muss. Gemäß diesem Ausführungsbeispiel ist also der Leistungsregler parallel zum Klopfregelkreis angeordnet. Der Klopfregelkreis tritt nur in Kraft, wenn Klopfen detektiert wird.

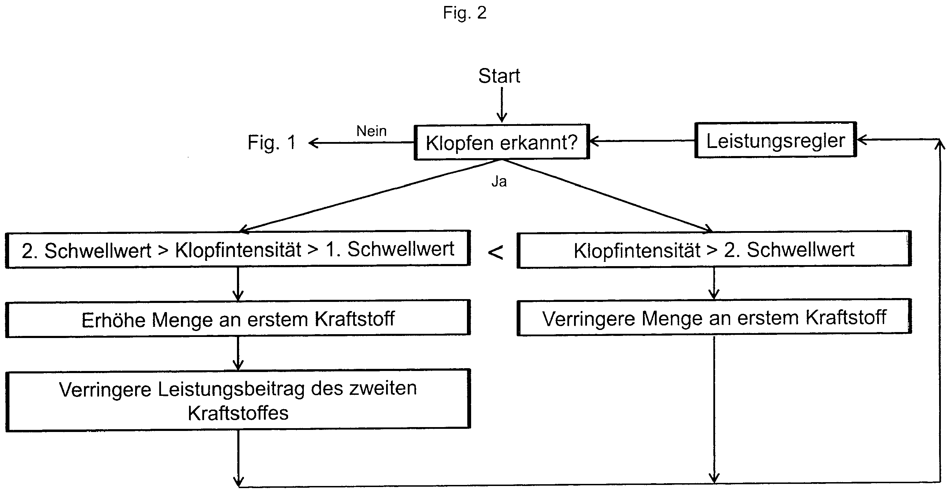

Ein alternatives Ausführungsbeispiel ist in Fig. 2 gezeigt. In diesem Ausführungsbeispiel ist der Leistungsregelkreis in Serie zu dem Klopfregelkreis geschaltet ist. Das bedeutet, dass nach Abarbeiten der anhand Fig. 1 beschriebenen Regeleingriffe im Falle von Klopfen die Schleife direkt an den Leistungsregler führt. Hier ist also die Klopfdetektion als Teil des Leistungsreglers zu sehen. Sie wird nur aktiv, wenn Klopfen detektiert wird. Liegt kein Klopfsignal vor, erfolgt dieselbe Regelung wie in Fig. 1 beim Punkt "Start".

In Fig. 1 und 2 ist der Leistungsregelkreis gemäß dem Stand der Technik ausgebildet. Bei einem stationären Dual-Fuel-Motor (zum Beispiel in einem Genset) kann die Leistungsvorgabe zum Beispiel in Form eines Drehmomentes oder einer Drehzahl erfolgen. Bei einem Dual-Fuel-Motor eines Kraftfahrzeuges kann dies zum Beispiel in Form einer Geschwindigkeitsanforderung erfolgen.

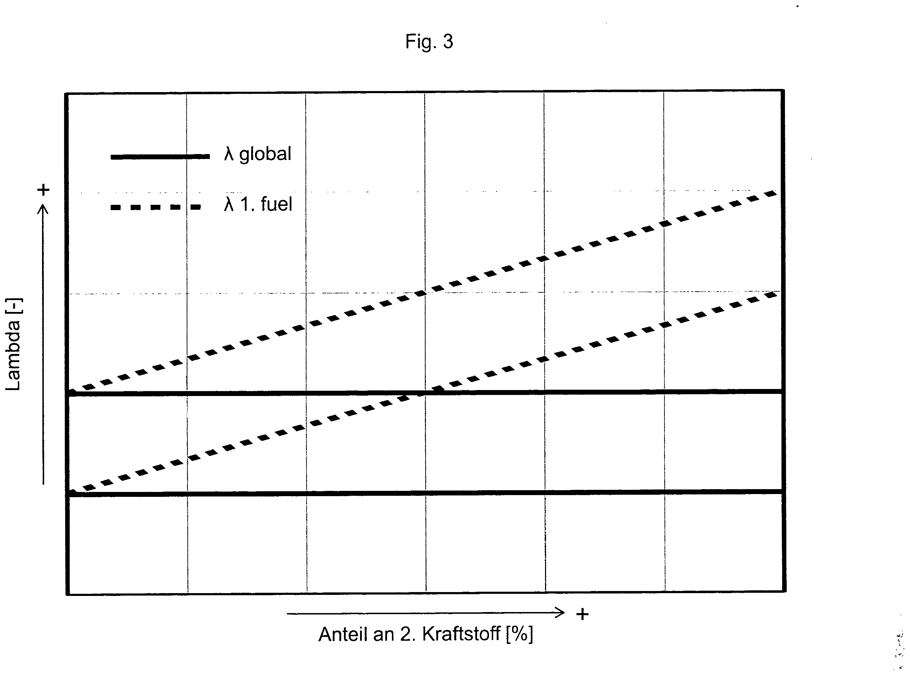

Fig. 3 zeigt ein Diagramm des Verbrennungs-Luft-Verhältnisses Lambda in Abhängigkeit des Anteils des zweiten Kraftstoffes, ausgedrückt in Prozent des Leistungsbeitrages. Am Ursprung des Diagramms ist der Anteil des zweiten Kraftstoffes "Null". Eingezeichnet sind zwei Kurvenscharen für unterschiedliche Ladedrücke. Die untere Kurvenschar, die sich aus einer ausgezogenen und einer punktierten Linie zusammensetzt, stellt den Fall für einen geringeren Ladedruck dar, die obere Kurvenschar für einen höheren Ladedruck.

Die ausgezogene Linie stellt das globale Lambda, d.h. das Luftverhältnis bezogen auf beide Kraftstoffe dar. Punktiert dargestellt ist das Lambda bezogen auf den ersten Kraftstoff. Ein größeres Lambda bedeutet mageres Gemisch. Man erkennt, dass auch bei Änderung des Leistungsbeitrages des zweiten Kraftstoffes das globale Lambda, d. h. die globale Gemischzusammensetzung hinsichtlich ihres stöchiometrischen Verhältnisses zur Verbrennungsluft konstant bleibt. Dies wird erreicht, indem bei steigendem Anteil an zweitem Kraftstoff das Lambda des ersten Kraftstoffes (punktiert dargestellt) erhöht wird. Eine Erhöhung des Lambdas bedeutet ja eine höhere Verdünnung, also eine Abmagerung des Gemisches. Das Diagramm illustriert auf anschauliche Weise, wie es gelingt, das globale Verbrennungs-Luftverhältnis auch bei sich änderndem Anteil an zweiten Kraftstoff konstant zu halten.

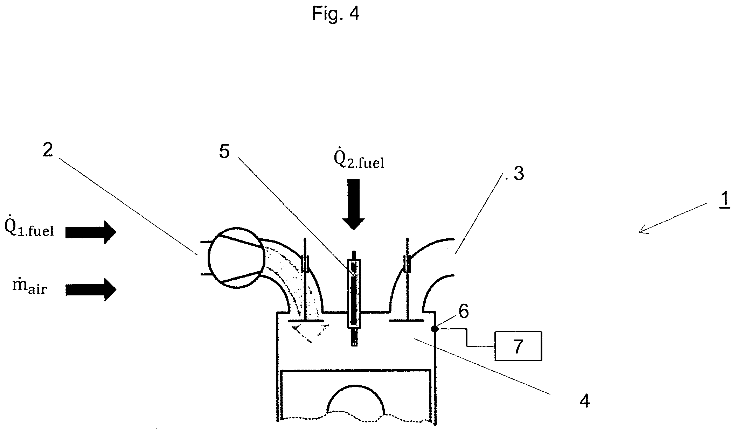

Fig. 4 zeigt schematisch einen Brennraum eines erfindungsgemäßen Dual-Fuel-Motors 1. Der Brennraum weist eine Einlass- und eine Auslassseite auf. Über den Einlasstrakt 2 wird dem Brennraum 4 eine Menge Q_{1.fuel} an Kraftstoff innerhalb einer Zeiteinheit, d. h. ein "Q-Punkt" eines ersten Kraftstoffes (1. Fuel), *Q̇*_{1.fuel}, zugeführt. In Einheiten ausgedrückt, ist dies eine Leistung, da chemische Energie innerhalb einer Zeiteinheit eingebracht wird. Ebenfalls wird ein Massenstrom (Masse pro Zeit) an Luft in den Brennraum eingebracht, in der Figur ist dies als ṁₐᵢᵣ bezeichnet.
Da im Zusammenhang mit der vorliegenden Anmeldung die jeweiligen Leistungsbeiträge der Kraftstoffe entscheidend sind, soll an dieser Stelle betont werden, dass für den Leistungsbeitrag eines Kraftstoffes nicht nur die - typischerweise volumetrisch oder gravimetrisch bemessene - Menge an zugeführtem Kraftstoff entscheidend ist. Durch an sich bekannte Maßnahmen kann die Leistungsentfaltung einer zugeführten Menge an Kraftstoff im Brennraum variiert werden. Ein Beispiel ist die Veränderung eines Zündzeitpunktes. In der Beschreibung wurden alternative Maßnahmen wie die Veränderung der Einspritzcharakteristik diskutiert. Die zugeführte Menge ist also nicht gleichzusetzen mit dem entsprechenden Leistungsbeitrag, vielmehr wird für diesen eine gegebenenfalls gesetzte Maßnahme zur Variation der-Leistungsentfaltung mitberücksichtigt.
Die Zufuhr an erstem Kraftstoff und Luft in den Einlasstrakt 2 ist durch schwarze Pfeile deutlich gemacht. Auch gezeigt ist eine Einspritzeinheit 5, über die der zweite Kraftstoff (2. Fuel) in den Brennraum eingebracht werden kann. Die Menge an zweitem Kraftstoff pro Zeiteinheit wird in der Figur als *Q̇*_{2.fuel} bezeichnet. Die Zufuhr an zweitem Kraftstoff ist auch durch einen schwarzen Pfeil visualisiert.
Angedeutet ist auch ein Klopfsensor 6, durch welchen einer Steuer- oder Regeleinrichtung 7 des Dual-Fuel-Motors 1 ein für den wenigstens einen Brennraum 4 repräsentatives Klopfsignal zuführbar ist.

### Liste der verwendeten Bezugszeichen:

- 1: Dual-Fuel-Motor
- 2: Einlasstrakt
- 3: Auslasstrakt
- 4: Brennraum
- 5: Einspritzeinheit
- 6: Klopfsensor
- 7: Steuer- oder Regeleinrichtung
- λ: Verbrennungsluftverhältnis Lambda

## Patentansprüche

1. Verfahren zur Regelung eines Dual-Fuel-Motors (1), wobei wenigstens einem Brennraum (4) des Motors Leistung in Form eines ersten, gasförmigen Kraftstoffes und in Form eines selbstzündenden - insbesondere flüssigen - zweiten Kraftstoffs zugeführt wird, wobei ein für den wenigstens einen Brennraum (4) repräsentatives Klopfsignal detektiert wird, **dadurch gekennzeichnet, dass** für den Fall, dass Klopfen detektiert wird
- bei Vorliegen eines Klopfsignals, welches auf ein Klopfen über einer ersten Intensität hinweist, die Menge an erstem Kraftstoff, welche dem wenigstens einen Brennraum (4) des Motors (1) zugeführt wird, erhöht wird, und die durch die Erhöhung der Menge an erstem Kraftstoff bewirkte erhöhte Leistungseinbringung in den Brennraum (4) durch eine entsprechende Verringerung des Leistungsbeitrages des zweiten Kraftstoffes kompensiert wird,
- bei Vorliegen eines Klopfsignals, welches auf ein Klopfen mit zumindest einer zweiten Intensität hinweist, welche größer ist als die erste Intensität, die Menge an erstem Kraftstoff, welche dem wenigstens einen Brennraum (4) zugeführt wird, reduziert wird.

2. Verfahren nach Anspruch 1, wobei die Verringerung des Leistungsbeitrages des zweiten Kraftstoffes durch Reduktion der Menge an eingebrachtem zweiten Kraftstoff und/oder einer Verzögerung des Zeitpunkts der Einbringung des zweiten Kraftstoffes und/oder einer Änderung der Einspritzcharakteristik des zweiten Kraftstoffes vorgenommen wird.

3. Verfahren nach Anspruch 1 oder 2, wobei der erste Kraftstoff einer Luft beigemischt wird und zur Erhöhung der Menge an erstem Kraftstoff die Temperatur des Gemisches aus Luft und erstem Kraftstoff gesenkt wird.

4. Verfahren nach wenigstens einem der vorhergehenden Ansprüche, wobei zur Erhöhung der Menge des ersten Kraftstoffes ein Ladedruck des ersten Kraftstoffes erhöht wird.

5. Verfahren nach wenigstens einem der vorhergehenden Ansprüche, wobei der erste Kraftstoff einer Luft beigemischt wird und zur Erhöhung der Menge an erstem Kraftstoff das Verhältnis von erstem Kraftstoff und Luft erhöht wird.

6. Verfahren nach wenigstens einem der vorhergehenden Ansprüche, wobei das Ausmaß der Erhöhung der Menge an erstem Kraftstoff davon abhängt, wie groß die Intensität des Klopfsignals ist, wobei vorzugsweise eine der Intensität des Klopfsignals proportionale Erhöhung durchgeführt wird.

7. Verfahren nach wenigstens einem der Ansprüche 2 bis 6, wobei die Einspritzcharakteristik so geändert wird, dass der Großteil der eingespritzten Menge an zweitem Kraftstoff später erfolgt.

8. Verfahren nach wenigstens einem der Ansprüche 2 bis 7, wobei die Einspritzcharakteristik so geändert wird, dass der Beginn des Einspritzens - gegebenenfalls ohne Änderung der Form des Profils - später erfolgt.

9. Verfahren nach wenigstens einem der Ansprüche 1 bis 8, wobei der zweite Kraftstoff in mehreren Intervallen eingespritzt wird.

10. Dual-Fuel-Motor (1), mit wenigstens einem Brennraum (4), dem Leistung in Form eines ersten, gasförmigen Kraftstoffes und in Form eines selbstzündenden - insbesondere flüssigen - zweiten Kraftstoffs zuführbar ist, wobei ein Klopfsensor (6) vorgesehen ist, durch welchen einer Steuer- oder Regeleinrichtung (7) des Motors (1) ein für den wenigstens einen Brennraum (4) repräsentatives Klopfsignal zuführbar ist, **dadurch gekennzeichnet, dass** die Steuer- oder Regeleinrichtung (7) dazu ausgebildet ist, für den Fall, dass Klopfen detektiert wird
- bei Vorliegen eines Klopfsignals, welches auf ein Klopfen über einer ersten Intensität hinweist, die Menge an erstem Kraftstoff, welche dem wenigstens einen Brennraum (4) des Dual-Fuel-Motors (1) zugeführt wird, zu erhöhen, und die durch die Erhöhung der Menge an erstem Kraftstoff bewirkte erhöhte Leistungseinbringung in den Brennraum (4) durch eine entsprechende Verringerung des Leistungsbeitrages des zweiten Kraftstoffes zu kompensieren,
- bei Vorliegen eines Klopfsignals, welches auf ein Klopfen mit zumindest einer zweiten Intensität hinweist, welche größer ist als die erste Intensität, die Menge an erstem Kraftstoff, welche dem wenigstens einen Brennraum (4) zugeführt wird, zu reduzieren.

## Claims

1. A method of regulating a dual-fuel engine (1), wherein power is supplied to at least one combustion chamber (4) of the engine in the form of a first, gaseous fuel and in the form of a self-igniting - in particular liquid - second fuel, wherein a knock signal representative of the at least one combustion chamber (4) is detected, **characterized in that**, in the event that knocking is detected,
- in the presence of a knock signal indicating knocking above a first intensity, the quantity of the first fuel supplied to the at least one combustion chamber (4) of the engine (1) is increased, and the increased power input into the combustion chamber (4) caused by the increase in the quantity of the first fuel is compensated by a corresponding reduction in the power contribution of the second fuel,
- in the presence of a knock signal indicating knocking with at least a second intensity larger than the first intensity, the quantity of the first fuel supplied to the at least one combustion chamber (4) is reduced.

2. The method according to claim 1, wherein the reduction of the power contribution of the second fuel is achieved by reducing the quantity of the second fuel introduced and/or delaying the point in time of introducing the second fuel and/or changing the injection characteristics of the second fuel.

3. The method according to claim 1 or 2, wherein the first fuel is admixed to air and the temperature of the mixture of air and first fuel is lowered to increase the quantity of first fuel.

4. The method according to at least one of the preceding claims, wherein a boost pressure of the first fuel is increased to increase the quantity of the first fuel.

5. The method according to at least one of the preceding claims, wherein the first fuel is admixed to air and the ratio between first fuel and air is increased to increase the quantity of the first fuel.

6. The method according to at least one of the preceding claims, wherein the extent of the increase in the quantity of the first fuel depends on the level of the intensity of the knock signal, wherein preferably an increase proportional to the intensity of the knock signal is performed.

7. The method according to at least one of claims 2 to 6, wherein the injection characteristics is changed in such a way that the majority of the injected quantity of second fuel occurs later.

8. The method according to at least one of claims 2 to 7, wherein the injection characteristics is changed in such a way that the start of injection occurs later, if necessary without any alteration of the shape of the profile.

9. The method according to at least one of claims 1 to 8, wherein the second fuel is injected at several intervals.

10. A dual-fuel engine (1) comprising at least one combustion chamber (4) to which power can be supplied in the form of a first, gaseous fuel and in the form of a self-igniting - in particular liquid - second fuel, wherein a knock sensor (6) is provided, by means of which a knock signal representative of the at least one combustion chamber (4) can be supplied to a control or regulating device (7) of the engine (1), **characterized in that** the control or regulating device (7), in the event that knocking is detected, is designed to carry out the following:
- in the presence of a knock signal indicating knocking above a first intensity, the quantity of the first fuel supplied to the at least one combustion chamber (4) of the dual fuel engine (1) is increased, and the increased power input into the combustion chamber (4) caused by the increase in the quantity of the first fuel is compensated by a corresponding reduction in the power contribution of the second fuel,
- in the presence of a knock signal indicating knocking with at least a second intensity larger than the first intensity, the quantity of the first fuel supplied to the at least one combustion chamber (4) is reduced.

## Revendications

1. Procédé de réglage d'un moteur bicarburant (1), la puissance étant amenée à au moins une chambre de combustion (4) du moteur sous la forme d'un premier carburant sous forme gazeuse et sous la forme d'un deuxième carburant auto-inflammable - notamment fluide, un signal de tapotement représentatif de l'au moins une chambre de combustion (4) étant détecté, **caractérisé en ce qu'**en cas de détection de tapotement :
- en présence d'un signal de tapotement indiquant un tapotement à une première intensité, la quantité de premier carburant amenée à l'au moins une chambre de combustion (4) du moteur (1) est accrue et l'apport de puissance accrue provoquée par l'accroissement de la quantité de premier carburant dans la chambre de combustion (4) est compensé par une réduction correspondante de la contribution de puissance du deuxième carburant ;
- en présence d'un signal de tapotement indiquant un tapotement à au moins une deuxième intensité plus importante que la première intensité, la quantité de premier carburant amenée à l'au moins une chambre de combustion (4) est réduite.

2. Procédé selon la revendication 1, la réduction de la contribution de puissance du deuxième carburant est réalisée par réduction de la quantité de deuxième carburant amenée et/ou par un retardement du moment d'apport du deuxième carburant et/ou d'un changement de la caractéristique d'injection du deuxième carburant.

3. Procédé selon la revendication 1 ou 2, le premier carburant étant mélangé à de l'air et la température du mélange d'air et de premier carburant étant diminuée pour accroître la quantité de premier carburant.

4. Procédé selon au moins l'une quelconque des revendications précédentes, une pression de charge du premier carburant étant accrue pour accroître la quantité de premier carburant.

5. Procédé selon au moins l'une quelconque des revendications précédentes, le premier carburant étant mélangé à de l'air et le rapport du premier carburant et de l'air étant accru en augmentant la quantité de premier carburant.

6. Procédé selon au moins l'une quelconque des revendications précédentes, l'ampleur de l'accroissement de la quantité de premier carburant dépendant de l'ampleur de l'intensité du signal de tapotement, un accroissement proportionnel de l'intensité du signal de tapotement étant de préférence réalisé.

7. Procédé selon au moins l'une quelconque des revendications 2 à 6, la caractéristique d'injection étant modifiée de telle sorte que la grande partie de la quantité de deuxième carburant injectée est réalisée ultérieurement

8. Procédé selon au moins l'une quelconque des revendications 2 à 7, la caractéristique d'injection étant modifiée de telle sorte que le début de l'injection est réalisé ultérieurement - le cas échéant sans changement de la forme du profil.

9. Procédé selon au moins l'une quelconque des revendications 1 à 8, le deuxième carburant étant injecté pendant plusieurs intervalles.

10. Moteur bicarburant (1), avec au moins une chambre de combustion (4) à laquelle la puissance peut être amenée sous la forme d'un premier carburant sous forme gazeuse et sous la forme d'un deuxième carburant auto-inflammable - notamment fluide, un capteur de tapotement (6) étant prévu à travers lequel un signal de tapotement représentatif de l'au moins une chambre de combustion (4) peut être amené à un dispositif de commande ou de réglage (7) du moteur (1) ; **caractérisé en ce qu'**en cas de détection de tapotement, le dispositif de commande ou de réglage (7) est réalisé :
- en présence d'un signal de tapotement indiquant un tapotement à une première intensité, pour accroître la quantité de premier carburant amenée à l'au moins une chambre de combustion (4) du moteur bicarburant (1) et pour compenser l'apport de puissance accrue provoquée par l'accroissement de la quantité de premier carburant dans la chambre de combustion (4) par une réduction correspondante de la contribution de puissance du deuxième carburant ;
- en présence d'un signal de tapotement indiquant un tapotement à au moins une deuxième intensité plus importante que la première intensité, pour réduire la quantité de premier carburant amenée à l'au moins une chambre de combustion (4).
